# EUROPÄISCHE PATENTSCHRIFT

(11) **EP 1 395 443 B1**
(45) Veröffentlichungstag und Bekanntmachung des Hinweises auf die Patenterteilung: **25.02.2009**
(21) Anmeldenummer: 02771581.2
(22) Anmeldetag: 17.05.2002
(51) Int. Cl.: B44B 5/02, B41C 1/18, B44C 1/22, B30B 5/04, B23K 26/06, B23K 26/08, B23K 26/36

(54) **VERFAHREN ZUM STRUKTURIEREN VON ENDLOSEN BÄNDERN FÜR PRESSEN**
METHOD FOR STRUCTURING ENDLESS BELTS FOR PRESSES
PROCEDE POUR STRUCTURER DES BANDES SANS FIN POUR PRESSES

(30) Priorität: 22.05.2001 AT 8132001
(43) Veröffentlichungstag der Anmeldung: 10.03.2004
(73) Patentinhaber: BERNDORF BAND GesmbH, A-2560 Berndorf (AT)
(72) Erfinder: BADER, Dieter, A-2560 Berndorf (AT)
(74) Vertreter: Widtmann, Georg
(86) Internationale Anmeldenummer: PCT/AT2002/000151
(87) Internationale Veröffentlichungsnummer: WO 2002/094580

(56) Entgegenhaltungen:
- EP-A- 0 559 900
- EP-A- 0 733 951
- EP-A- 1 034 876
- WO-A-95/23244
- DE-A- 4 033 230
- DE-A- 4 329 338
- DE-A- 19 708 178

## Beschreibung

Die Erfindung bezieht sich auf ein Verfahren zum Strukturieren von endlosen Bändern, insbesondere Stahlbändern, für Pressen, z. B. Doppelbandpressen gemäß dem Oberbegriff des Anspruchs 1 (siehe, z.B., EP-A-1 034 876).

Pressen halben eine vielfältige Aufgabe. So soll in Pressen eine Verdichtung von Produkten, gegebenenfalls unter Beaufschlagung mit Wärme oder Kälte und eine bestimmte Oberflächenstruktur erreicht werden. Hierzu können Pressen unterschiedlicher Bauart Verwendung finden. Um eine kontinuierliche Fertigung von Gütern, wie beispielsweise Spanplatten, Dekorplatten u. dgl., durchzuführen, werden Pressen, insbesondere Doppelbandpressen, mit endlosen Bändern eingesetzt. Bei diesen Pressen wird das Produkt nicht nur von der Oberfläche des Bandes geformt, sondern auch gleichzeitig durch die Vorrichtung gefördert, wobei simultan die Hitze- oder Kälteeinwirkung stattfinden kann, je nach dem, ob duroplastische oder thermoplastische Kunststoffschichten oder Bindemittel vorliegen. An die Oberflächenbeschaffenheit der Arbeitsfläche derartiger Bänder werden besonders hohe Ansprüche gestellt. Sollen plane Oberflächen erhalten werden, so werden derartige Bänder mechanisch zu einer hohen Oberflächengüte bearbeitet und sodann gegebenenfalls mit einer Chromschichte versehen.

Ist beabsichtigt, eine bestimmte Strukturierung vertieft oder erhöht, z. B. in Form einer Holzmaserung, Kork, der Oberfläche zu erreichen, so sind verschiedene Verfahren bekannt. So kann beispielsweise auf die Oberfläche eine einheitliche Schichte aus einem strahlenvernetzenden Material, beispielsweise mit noch gering vernetztem Kunststoff, aufgebracht werden, der durch Einwirkung von UV-Strahlen, aber auch Licht, insbesondere Blaulicht, weitervernetzt und somit unlöslich für bestimmte Lösungsmittel, wie Wasser, wird. Nach Belichtung der Oberfläche kann der unbelichtete Kunststoff abgewaschen werden und es kann anschließend entweder eine Ätzung oder auch ein Auftragen von Metall, beispielsweise Kupfer, durchgeführt werden.

In der WO 95 23244 A ist ein Verfahren zum Strukturieren von Stahlrollen beschrieben, wobei auf der Außenfläche der Rolle eine Beschichtung mit einzelnen Tropfen gebildet wird, die gegen die Außenfläche der Rolle projiziert werden und auf dieser verbleiben, wonach an den unbeschichteten Bereichen Metall abgetragen wird.

Die DE 197 08 178 A offenbart ein Verfahren zur Reproduktion von grafischen oder fotografischen Vorlagen auf flächigen Gegenständen durch Bearbeitung mit verschiedenen Werkzeugmaschinen, wobei ein Foto gescannt wird. Die digitalen Daten des Fotos sind in einem Computer gespeichert. Die Bilddatei wird einer Bildfläche zugeordnet, wobei entweder die Abmessungen der Bildfläche frei wählbar sind, und sich aus diesen Abmessungen der Abstand der Bildpunkte ergibt oder der Abstand der Bildpunkte frei wählbar ist, und sich daraus die Abmessungen der Bildfläche ergeben. Die gewählte Bildfläche wird zu einem Rastermuster gelegt, wobei die Abmessungen eines Rasterelementes ebenfalls frei wählbar sind.

Ein weiteres und vielfältig ausgeübtes Verfahren zur Aufbringung von Schutzschichten, die entweder ein Abtragen der metallischen Oberflächen oder ein Ablagern von Metallen verhindern sollen, besteht darin, dass über gummielastische Walzen, beispielsweise aus Silikonkautschuk, auf derartige endlose Bänder entweder säureresistente oder säureempfindliche Beschichtungen aufgebracht werden, so dass danach eine Abtragung des Metalles oder eine Beschichtungen mit einem Metall durchgeführt werden kann. Nachteilig bei diesen Verfahren ist, dass die Muster der Strukturierungen nur mit einer Originalgröße aufgebracht werden können. Bänder mit einer Länge von z. B. über 40 m können z. B. 20 Strukturen aufweisen. Die Bandlängen weisen jedoch je nach Maschine, und selbst für ein und dieselbe Maschine, unterschiedliche Längen auf, so dass gegebenenfalls ein Bereich am Band frei von den Strukturen bliebe. Um diesen Bereich auch zu strukturieren, wird dieser von künstlerisch Begabten in Verlängerung einer Struktur ausgestaltet, um den Leerraum zu überbrücken. Ein derartiges händisches Angleichen hat zur Folge, dass bei einer Mehrzahl von Mustern zumindest ein, wenn auch geringfügig unterschiedliches Muster auf dem Stahlband angeordnet ist, so dass beispielsweise bei der Produktion von oberflächlich strukturierten Dekorplatten, z. B. jede zwanzigste Dekorplatte unterschiedlich zu den neunzehn anderen ist oder es werden alle zwanzig Muster händisch angepasst.

*In der* EP 1 034 876 A *ist ein Verfahren zum Strukturieren von endlosen Stahlbändern für Doppelbandpressen beschrieben, wobei das Stahlband strukturiert, poliert, mattiert und hart verchromt wird. Die Strukturierung erfolgt durch eine Ätzgravur, die ein- oder mehrfach angewendet werden kann. Vor dem Polieren wird eine dünne Metallschichte aus Nickel oder Kupfer aufgebracht. Für die Ätzgravur wird ausgeführt, dass dieselbe mehrfach angewendet werden kann, um eine eher richtungslose Oberflächenstruktur zu erzielen..*

Der vorliegenden Erfindung ist zum Ziel gesetzt, ein Verfahren zum Strukturieren von endlosen Bändern zu schaffen, bei welchem auf einem Band ungeachtet der Länge und gegebenenfalls Breite desselben idente Abbildung aller Muster mit dem vollen Bildinhalt vorliegen, wobei unerwünschte Abstände vermieden werden können. Die Produkte, welche mit Bändern nach dem erfindungsgemäßen Verfahren hergestellt sind, können vollkommene Identität aufweisen, so dass zusätzliche Materialverluste nicht mehr auftreten und auch ein aufwendiges händisches. Anpassen nicht mehr durchgeführt werden muss.

Das erfindungsgemäße Verfahren zum Strukturieren von endlosen Bändern, insbesondere Stahlbändern, für Pressen, z. B. Doppelbandpressen, wobei auf einer Außenfläche des Bandes eine Beschichtung aufgetragen und sodann vom Band Metall ab- und/oder aufgetragen wird, und eine Vielzahl von einzelnen Strukturen am endlosen Band aneinander gereiht wird, besteht im Wesentlichen darin, dass die Beschichtung mit einzelnen Tropfen gebildet wird, die gegen die Außenfläche des Bandes projiziert werden und auf dieser verbleiben, wonach an den unbeschichteten Bereichen Metall ab- und/oder aufgetragen wird, wobei vor dem Strukturieren des Bandes die Länge undloder Breite der endlosen Bänder bestimmt und aufgenommen, vorzugsweise gespeichert, wirdlwerden, die Länge und/oder Breite der Strukturen proportional zur ganzzahligen Aufnahme der Strukturen am Band in Länge und/ oder Breite verändert werden. Durch den Auftrag bzw. die Abtragung der Beschichtung mit einzelnen Tropfen bzw. an einzelnen Punkten kann auf einfachste Art und Weise eine Vergrößerung oder Verkleinerung des abzubildenden Bildes durchgeführt werden, da nur die Anzahl und/oder Tropfengröße oder Punkte, welche besonders klein gehalten werden kann maßgebend ist für die mögliche genaue Vergrößerung oder Verkleinerung. Weiters besteht die Möglichkeit, den Abstand der Tropfen zueinander zu regeln, so dass eine vollkommen erwünschte genaue Erfüllung des endlosen Bandes möglich ist. Dadurch, dass die Tropfen oder Punkte gegen die Außenfläche des Bandes projiziert, also z. B. geworfen, werden, ist eine erwünschte möglichst genaue Positionierung der einzelnen Tropfen oder Punkte ermöglicht, die nicht durch den Transfer, beispielsweise über Walzen od. dgl., insbesondere in ihrer Längs- bzw. Breitenerstreckung des abzubildenden Bildes, verändert wird. Mit der punktweisen Abtragung einer vorerst flächendeckenden Beschichtung, die z. B. säure- oder lösungsmittelresistent ist, die durch thermische Einwirkung erfolgt, können die erwünschten Strukturen gedehnt oder geschrumpft werden und sodann die freigelegten, insbesondere punktförmigen, Metallflächen teilweise abgetragen oder mit Metall beschichtet werden. Unter thermisch wirkenden Strahlen sind IR-Strahlen, Laserstrahlen, Mikrowellen od. dgl. zu verstehen. Durch die metallische Veränderung, u. zw. Abtragen des Metalles bzw. Auftragen des Metalles an den unbeschichteten Bereichen, kann die Strukturierung durch bereits technologisch abgesicherte Verfahren durchgeführt werden.

Mit einem derartigen Verfahren kann erreicht werden, dass entweder keine Abstände zwischen den einzelnen Mustern eines endlos gefertigten Bandes vorliegen oder lediglich geringfügige Leerstrecken zwischen den einzelnen Mustern vorliegen, um das Ablängen derselben entsprechend dem erwünschten Produkt, z. B. Melaminharzdekorplatten, zu ermöglichen.

Aus der EP 0 492 351 A2, die sich auf Drucktechnik bezieht, ist es bekannt, Muster für eine Siebdruckschablone längen- und breitenmäßig anzupassen. Hierbei wird ein Sieb, also ein lockeres Gewebe, beispielsweise aus Seide, Polyester od. dgl., mit einem Film mit lichtempfindlichem Material versehen. Diese Schichte wird sodann mittels eines Düsendruckers (Jetprinter) entsprechend dem abzubildenden Bild versehen. Dieses Bild wird mit einer Datenverarbeitungsanlage an die Größe des Siebes angepasst. Danach wird belichtet, worauf die unbelichteten Stellen herausgelöst werden können. Mit einem derartigen Verfahren ist es möglich, einen mehrfarbigen. Siebdruck anzufertigen, da eine besonders genaue Anpassung der einzelnen Farben ermöglicht ist.

Wird die Länge und/oder die Breite der einzelnen Muster bestimmt und aufgenommen, vorzugsweise gespeichert, und anschließend die Länge und/oder Breite des endlosen Bandes durch die des Musters dividiert und sodann die einzelnen Strukturen auf die Länge und/oder Breite auf ein ganzzahliges Vielfaches der Länge und/ oder Breite des Bandes angepasst, so kann auf besonders einfache Weise ein jeweiliges Muster an die Dimensionen eines Bandes angepasst werden.

Treten die einzelnen Tropfen im Wesentlichen gleichzeitig aus einer Vielzahl von Öffnungen gegen das Band aus, so können besonders kleine Tropfen auf das Band projiziert werden, wobei die Geschwindigkeit des Beschichtungsvorganges nicht beeinträchtigt werden muss.

Erfolgt während des Beschichtens des Bandes eine Relativbewegung zwischen Band und Öffnungen in Bandlängs- und/oder Bandquerrichtung, so ist es nicht erforderlich, dass das Band vorab, beispielsweise mit einer strahlenempfindlichen Schichte versehen wird und dass eine Belichtung der beschichteten Bereiche, beispielsweise bildmäßig, erfolgt, sondern es kann eine quasi kontinuierliche Beschichtung des Bandes oder kontinuierliche Abtragung erfolgen.

Erfolgt während der Einwirkung von thermisch wirksamen Strahlen eine Relativbewegung zwischen Band und einer thermisch wirkenden Strahlenquelle in Bandlängs- und/oder Bandquerrichtung, so kann über die Steuerung der Relativgeschwindigkeit eine vollkommen exakte Abbildung erreicht werden, wobei durch Änderung derselben auch eine längen- und breitenmäßige Anpassung von abzubildenden Strukturen auf einfachste Weise erreicht werden kann.

Erfolgt die Beschichtung der metallischen Oberfläche des Bandes unmittelbar auf die metallische Oberfläche, so ist ein besonders einfaches Verfahren gegeben, wobei durch Weglassung von Zwischenschichten die Genauigkeit der Beschichtung besonders einfach verwirklicht werden kann.

Wird die Beschichtung nach der Projektion der Tropfen auf die metallische Oberfläche, insbesondere durch Strahleneinwirkung, verfestigt, z. B. polymerisiert, so kann das Lösungsverhalten der Schichte soweit verändert werden, dass nachfolgende Ab- bzw. Aufträgvorgänge besonders einfach zu verwirklichen sind.

Wird nach der Verfestigung der Tropfen Metall des Bandes auf- /abgetragen, so kann eine besonders plane Untergrundschichte des strukturierten endlosen Bandes erhalten werden.

Wird dasselbe Band erneut nach Metallauf- und/oder -abtrag mit einzelnen Tropfen beschichtet und erneut Metall ab- oder aufgetragen, so können unterschiedliche Schichtdicken bei der Strukturierung auf besonders einfache Weise erhalten werden.

Wird dasselbe Band erneut nach dem Auf- bzw. Abtragen von Metall mit einer flächendeckenden Beschichtung versehen, welche, vorzugsweise punktweise, durch Einwirkung von thermisch wirkenden Strahlen, insbesondere Laserstrahlen, abgebaut und/ oder abgetragen, z. B. oxidiert, wird, so kann auf besonders einfache Weise eine unterschiedlich tiefe Strukturierung am Band erreicht werden.

Wird das Band nach dem Auf- und/oder Abtragen des Metalles auf/von dem Band und der verfestigten Beschichtung des Bandes verchromt, insbesondere hartverchromt, so kann, wie an sich bekannt, eine besonders widerstandsfähige Oberfläche erreicht werden, die für eine langzeitige Lebensdauer Sorge tragen kann.

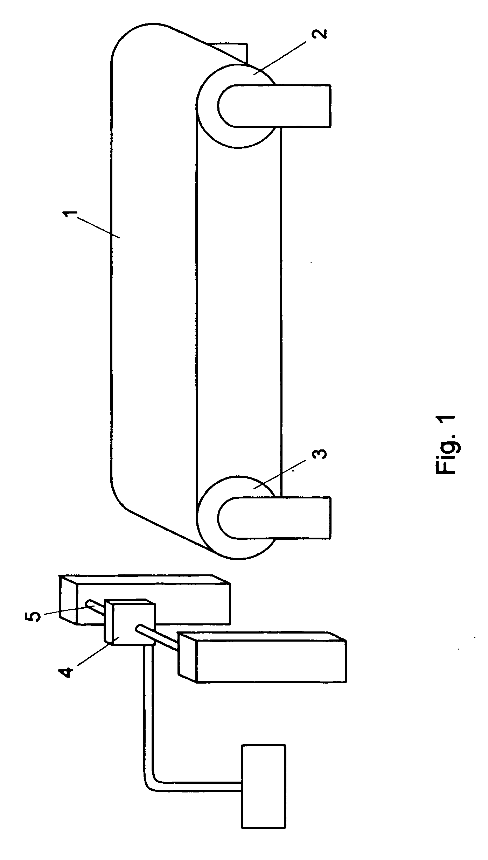

Im Folgenden wird das Verfahren anhand der Zeichnung und der Beispiele näher erläutert.

Die einzige Figur zeigt in schematischer Darstellung eine Beschichtungsanlage für ein endloses Band.

Die in der Fig. dargestellte Anlage zur Beschichtung weist ein endloses Band 1 auf, das über Rollen 2 und 3 umgelenkt bzw. angetrieben wird. An einem Ende ist eine Beschichtungsanlage, die einen Projektionskopf 4 aufweist, welcher entlang der Spindel 5 durch Drehung derselben in Längsrichtung der Spindel bewegt werden kann, *angeordnet.* Der Projektionskopf 4 weist eine Vielzahl von Düsen auf, z. B. einhundert, durch welche das beschichtende Material auf das Stahlband projiziert, also geschleudert wird.

Beispiel 1:

Ein Muster, nachdem die erwünschte Strukturierung vorgenommen werden *sollte, wurde* mit einem Scanner aufgenommen oder es *lag* bereits in digitalisierter Form vor. Das Muster *wurde* in einem Festspeicher einer Datenverarbeitungsanlage gespeichert, welcher sodann zur Steuerung des Projektionskopfes *diente.* Das Band aus rostfreiem Stahl *wurde* mit 24 m pro Minute in Umlauf gesetzt. Die Umlaufgeschwindigkeit des Bandes wurde über die Drehzahl der Antriebswalze gesteuert. Das Band *wies* eine Markierung auf, und es *wurde* die Zeit bestimmt, welche benötigt wurde, bis die Marke erneut bei dem Sensor vorbei lief. *Stellte sich ein gleichmäßiger Lauf ein,* so *konnte* mit der tropfenweisen Beschichtung aus einem Düsenkopf begonnen werden. Die Tropfen *wurden* mit einer Frequenz von 10 kHertz durch die einhundert Düsen in einem 40 µm Raster auf das Band geschleudert. Ein derartiger Kopf ist Stand der Technik und kann beispielsweise der EP 0 733 951 A2 entnommen werden. Nachdem eine vollkommene Längszeile auf dem Band als Beschichtung aufgebracht wurde, wurde der Düsenkopf quer zur Längsrichtung des Bandes versetzt, und es erfolgt erneut die Beschichtung. Die Steuerung des Düsenkopfes *erfolgte* über eine Datenverarbeitungsanlage, in welcher durch Quotientenbildung das mit einem Scanner aufgenommene Bild in seiner Länge und gegebenenfalls in seiner Breite derart abgeändert *wurde,* dass vollkommen proportional idente Bilder am Band ohne unerwünschte Leerräume *vorlagen.* Sodann wurde das Band aus einem austenitischen Stahl mit

| | Gew.-% |
|---|---|
| Kohlenstoff | 0,1 |
| Chrom | 17,1 |
| Nickel | 7,2 |
| Rest Eisen | |

mit einem sauren Ätzbad mit FeCl₃ geätzt. Danach wurde die Beschichtung mit einem organischen Lösungsmittel von der Bandoberfläche entfernt und eine weitere punktförmige Beschichtung, wie bereits beschrieben, aufgebracht und erneut geätzt. Dieser Vorgang wurde dreimal wiederholt, so dass drei verschiedene Ätztiefen vorlagen. Durch den Ätzvorgang *wurde* ein stufenfreier Übergang zwischen den einzelnen Ätzungen bewirkt.

Das erhaltene endlose Band wies 20 idente Strukturen auf, wobei keine unerwünschten Zwischenräume vorlagen.

Beispiel 2:

Ein Band gemäß Beispiel 1, das mit einer Beschichtung, die mit UV-Strahlen ausgehärtet wurde, mit einer Dicke 100 µm aus einem ungesättigten Polyesterharz vollflächig versehen wurde, wurde in der Anlage gemäß der Zeichnung montiert. Der Projektionskopf war durch einen Nd-Yag Laser mit 800 Watt Leistungsaufnahme gebildet. Es erfolgte eine Pulsung des Lasers mit einer Frequenz von 10 kHz.

Die Beschichtung wurde mit einer Punktgröße im Durchmesser von 60 *µm* abgebaut, wobei ein Raster von 40 *µm* eingehalten wurde. Sodann wurde eine Abscheidung von Kupfer mit einer Schichtdicke von 9µm vorgenommen, die Beschichtung mit organischen Lösungsmitteln abgelöst, erneut eine vollflächige Beschichtung auf dem Band in der Vorrichtung der Fig. in einem quer über die gesamte Breite verlaufenden Sprühkopf mit in Laufrichtung danach angeordneten Rakel aufgebracht und erneut punktweise abgebaut und anschließend Kupfer abgeschieden. Dieser Vorgang wurde dreimal wiederholt. Das so erhaltene Band wurde, wie an sich bekannt, hartverchromt und wies zwanzig Strukturen auf, die keine unerwünschten Zwischenräume hatten, so dass zwanzig vollkommen idente Strukturen am Band und somit bei dem erzeugten Produkt vorlagen.

Die Anpassung an das Band kann nicht nur in Längs-, sondern auch in Querrichtung erfolgen. Die unterschiedlichen Längen und Breiten können nicht nur über die Datenverarbeitungsanlage, sondern über eine Änderung der Umlaufgeschwindigkeit des Bandes und der Größe der Schritte der Querbewegung des Projektionskopfes erfolgen.

## Patentansprüche

1. Verfahren zum Strukturieren von endlosen Bändern (1), insbesondere Stahlbändern, für Pressen, z. B. Doppelbandpressen, wobei auf einer Außenfläche des Bandes (1) eine Beschichtung aufgetragen und sodann vom Band Metall ab- und/oder aufgetragen wird, und eine Vielzahl von einzelnen Strukturen am endlosen Band aneinander gereiht wird, **dadurch gekennzeichnet, dass** die Beschichtung mit einzelnen Tropfen gebildet wird, die gegen die Außenfläche des Bandes (1) projiziert werden und auf dieser verbleiben, wonach an den unbeschichteten Bereichen Metall ab- und/oder aufgetragen wird, wobei vor dem Strukturieren des Bandes (1) die Länge und/oder Breite der endlosen Bänder (1) bestimmt und aufgenommen, vorzugsweise gespeichert, wird/werden, die Länge und/oder Breite der Strukturen proportional zur ganzzahligen Aufnahme der Strukturen am Band (1) in Länge und/ oder Breite verändert werden.

2. Verfahren nach Anspruch 1, **dadurch gekennzeichnet, dass** die Länge und/oder Breite der endlosen Bänder durch die Länge und/oder Breite der einzelnen Strukturen dividiert und anschließend die Länge und/oder Breite der einzelnen Strukturen auf einen ganzzahligen Bruchteil der Länge und/oder Breite des Bandes angepasst wird/werden.

3. Verfahren nach Anspruch 1 oder 2, **dadurch gekennzeichnet, dass** die einzelnen Tropfen im Wesentlichen gleichzeitig aus einer Vielzahl von Öffnungen gegen das Band austreten.

4. Verfahren nach Anspruch 1, 2 oder 3, **dadurch gekennzeichnet, dass** während des Beschichtens des Bandes (1) eine Relativbewegung zwischen Band (1) und Öffnungen in Band-längs- und/ oder Bandquerrichtung erfolgt.

5. Verfahren nach einem der Ansprüche 1 bis 4, **dadurch gekennzeichnet, dass** während der Einwirkung von thermisch wirkenden Strahlen eine Relativbewegung zwischen Band (1) und einer thermischen Strahlenquelle (4) in Bandlängs- und/oder Bandquerrichtung erfolgt.

6. Verfahren nach einem der Ansprüche 1 bis 5, **dadurch gekennzeichnet, dass** die Beschichtung unmittelbar auf die metallische Oberfläche des Bandes (1) durchgeführt wird.

7. Verfahren nach einem der Ansprüche 1 bis 6, **dadurch gekennzeichnet, dass** die Beschichtung nach der Projektion der Tropfen auf die metallische Oberfläche, insbesondere durch Strahleneinwirkung, verfestigt, z. B. polymerisiert, wird.

8. Verfahren nach einem der Ansprüche 1 bis 7, **dadurch gekennzeichnet, dass** von/auf dem beschichteten Band (1) nach der Verfestigung der Tropfen Metall auf- und/oder abgetragen wird.

9. Verfahren nach einem der Ansprüche 1 bis 8, **dadurch gekennzeichnet, dass** dasselbe Band (1) erneut nach dem Aufbzw. Abtragen von Metall mit einzelnen Tropfen beschichtet wird, worauf erneut Metall ab- oder aufgetragen wird.

10. Verfahren nach einem der Ansprüche 1 bis 9, **dadurch gekennzeichnet, dass** dasselbe Band (1) erneut nach dem Aufbzw. Abtragen von Metall mit einer flächendeckenden Beschichtung versehen wird, welche, vorzugsweise punktweise, durch Einwirkung von thermisch wirkenden Strahlen, insbesondere Laserstrahlen, abgebaut und/oder abgetragen, z. B. oxidiert, wird.

11. Verfahren nach einem der Ansprüche 1 bis 10, **dadurch gekennzeichnet, dass** nach dem Auf- und/oder Abtragen des Metalles auf/von dem Band (1) und der verfestigten Beschichtung das Band verchromt, insbesondere hartverchromt, wird.

## Claims

1. Method for structuring endless bands (1), in particular steel bands, for presses, for example double band presses, wherein a coating is applied to an outer surface of the band (1) and then metal is removed from the band and/or applied to it, and a large number of individual structures are lined up next to one another on the endless band, **characterised in that** the coating is formed by individual drops, which are projected against the outer surface of the band (1) and remain thereon, after which metal is removed and/or applied to the uncoated regions, wherein before the structuring of the band (1), the length and/or width of the endless bands (1) is/are determined and recorded, preferably stored, and the length and/or width of the structures are changed proportionally to the integral recording of the structures on the band (1) with respect to length and/or width.

2. Method according to claim 1, **characterised in that** the length and/or width of the endless bands is/are determined and recorded, preferably stored and divided by the length and/or width of the individual structures and the length and/or width of the individual structures is/are then adapted to an integral fraction of the length and/or width of the band.

3. Method according to claim 1 or 2, **characterised in that** the individual drops issue substantially simultaneously from a large number of openings against the band.

4. Method according to claim 1, 2 or 3, **characterised in that** during the coating of the band (1), a relative movement takes place between the band (1) and openings in the longitudinal and/or transverse direction of the band.

5. Method according to claims 1 to 4, **characterised in that** a relative movement between the band (1) and a thermal radiation source (4) takes place in the longitudinal and/or transverse direction of the band during the action of thermally acting radiation.

6. Method according to any one of claims 1 to 5, **characterised in that** the coating is carried out directly onto the metallic surface of the band (1).

7. Method according to any one of claims 1 to 6, **characterised in that** the coating is hardened, for example polymerised, after the projection of the drops onto the metallic surface, in particular by the action of radiation.

8. Method according to any one of claims 1 to 7, **characterised in that** metal is applied and/or removed on/from the coated band (1) after the hardening of the drops.

9. Method according to any one of claims 1 to 8, **characterised in that** the same band (1) is coated again with individual drops after the application or removal of metal, whereupon metal is again removed or applied.

10. Method according to any one of claims 1 to 9, **characterised in that** after the application or removal of metal, the same band (1) is again provided with a surface-covering coating which, preferably pointwise, is reduced and/or removed, for example oxidised, by the action of thermally acting radiation, in particular laser radiation.

11. Method according to any one of claims 1 to 10, **characterised in that** after the application and/or removal of the metal on/from the band (1) and the hardened coating, the band is chrome-plated, in particular hard chrome-plated.

## Revendications

1. Procédé de structuration de bandes sans fin (1), en particulier de bandes en acier, destinées à des presses, en particulier des presses à double bande, dans lequel on dépose un revêtement sur une surface externe de la bande (1) et ensuite l'on enlève du métal de la bande et/ou l'on en dépose dessus, formant ainsi sur la bande sans fin un grand nombre de structures individuelles rangées les unes derrière les autres, **caractérisé en ce que** le revêtement est constitué de gouttes individuelles qui sont projetées sur la surface externe de la bande (1) et qui restent sur celle-ci, après quoi l'on enlève du métal et/ou l'on en dépose aux endroits non revêtus, et **en ce que**, avant la structuration de la bande (1), on détermine la longueur et/ou la largeur des bandes sans fin (1) et on les enregistre, de préférence en les stockant dans une mémoire, et l'on modifie la longueur et/ou la largeur des structures proportionnellement à l'emprise d'un nombre entier de structures sur la bande (1), en longueur et/ou en largeur.

2. Procédé conforme à la revendication 1, **caractérisé en ce que** l'on détermine la longueur et/ou la largeur des bandes sans fin (1) et on les enregistre, de préférence en les stockant dans une mémoire, on divise la longueur et/ou la largeur des bandes sans fin par la longueur et/ou la largeur des structures individuelles, et l'on adapte ensuite la longueur et/ou la largeur des structures individuelles sur une fraction entière de la longueur et/ou la largeur de la bande.

3. Procédé conforme à la revendication 1 ou 2, **caractérisé en ce que** les gouttes individuelles sortent pratiquement simultanément d'un grand nombre d'ouvertures dirigées vers la bande.

4. Procédé conforme à la revendication 1, 2 ou 3, **caractérisé en ce que**, pendant le dépôt du revêtement sur la bande (1), on fait bouger la bande (1) par rapport aux ouvertures, dans la direction longitudinale et/ou la direction transversale de la bande.

5. Procédé conforme à l'une des revendications 1 à 4, **caractérisé en ce que**, pendant l'exposition à l'action d'un rayonnement thermique, on fait bouger la bande (1) par rapport à la source (4) de rayonnement thermique, dans la direction longitudinale et/ou la direction transversale de la bande.

6. Procédé conforme à l'une des revendications 1 à 5, **caractérisé en ce que** l'on dépose le revêtement directement sur la surface métallique de la bande (1).

7. Procédé conforme à l'une des revendications 1 à 6, **caractérisé en ce que**, après la projection des gouttes sur la surface métallique, on fait durcir le revêtement, par exemple en le faisant polymériser, en particulier par exposition à l'action de rayons.

8. Procédé conforme à l'une des revendications 1 à 7, **caractérisé en ce que** l'on enlève du métal de la bande (1) revêtue et/ou l'on en dépose dessus après avoir fait durcir les gouttes.

9. Procédé conforme à l'une des revendications 1 à 8, **caractérisé en ce que**, après avoir enlevé ou déposé du métal, on revêt à nouveau la même bande (1) au moyen de gouttes individuelles, après quoi l'on enlève et/ou l'on dépose à nouveau du métal.

10. Procédé conforme à l'une des revendications 1 à 9, **caractérisé en ce que**, après avoir enlevé ou déposé du métal, on munit à nouveau la même bande (1) d'un revêtement couvrant sa surface, lequel est enlevé et/ou décomposé, par exemple oxydé, de préférence ponctuellement, par exposition à l'action d'un rayonnement thermique, en particulier d'un rayonnement laser.

11. Procédé conforme à l'une des revendications 1 à 10, **caractérisé en ce que**, après avoir enlevé du métal de la bande (1) et/ou en avoir déposé dessus, et une fois le revêtement durci, on soumet la bande à un chromage, en particulier un chromage dur.
